# EUROPEAN PATENT SPECIFICATION

(11) **EP 1 867 549 B1**
(45) Date of publication and mention of the grant of the patent: **24.07.2013**
(21) Application number: 06115577.6
(22) Date of filing: 16.06.2006
(51) Int. Cl.: B62B 5/06, B62B 3/06, B66F 9/20, B62D 51/04

(54) **Tiller head for use in a power operated industrial truck**
Deichselkopf für ein kraftbetriebenes Flurförderzeug
Tête de timon pour l'utilisation dans un chariot industriel motorisé

(43) Date of publication of application: 19.12.2007
(73) Proprietor: Atlet AB, 43582 Mölnlycke (SE)
(72) Inventor: Hell, Björn, 431 43 Mölndal (SE); Johansson, Niklas, 430 31 Åsa (SE); Peterson, Håkan, 412 75 Göteborg (SE); Ulmestrand, Dan, 425 65 Hisings Kärra (SE)
(74) Representative: Lind, Urban Arvid Oskar

(56) References cited:
- EP-B1- 1 153 815
- DE-A1- 19 548 950
- DE-A1-102004 005 762
- DE-U1- 20 013 656
- DE-U1- 20 215 752
- FR-A- 2 862 040
- US-A1- 2004 099 453
- US-A1- 2005 150 708

## Description

### Field of the invention

The present invention relates to a tiller arm, i.e. a control handle, for controlling the operation of a power operated industrial truck for materials handling.

### Background of the invention

Different types of tiller heads for power operated industrial trucks have been previously proposed. For example, such tiller heads are discussed in EP 1 053 971, EP 0 751 060 which can be considered as the closest prior art and comprises all the features of the preamble of claim 1, DE 196 01 694, EP 1 153 815 and US 5 007 301. However, even though many of these known tiller heads claim to be ergonomically favorable and user friendly, most of said known tiller heads have been found to be unsatisfactory in these respects. In particular, most of these known tiller heads require a flexure of the fingers and/or the wrist that is relatively fatiguing, and which may, in the long run, cause work related injuries. Further, most of these known tiller heads require rather cumbersome and difficult repositioning of the hands and fingers during operation. In particular, where relatively large forces are required to be applied to the tiller head during operation, in combination with an ergonomically complicated working position. Further, truck for different purposes and of different types often have the tiller arm joint, i.e. the pivoted connection between the tiller arm and the truck, arranged at different heights, typically ranging from 10 cm to 1 m above the ground. This means that a tiller arm which is ergonomically favourable for one truck, when operated in a first angle range, may not be equally favourable for another truck, when operated in a second angle range. To this end, tiller arms have in the past frequently been used for trucks for which they are not adapted and favourable, since the alternative of providing specifically adapted tiller arms for each truck type is both expensive and tedious.

There is therefore still a need for a more ergonomic and user friendly tiller head for effective operation of a power operated industrial truck. There is also a need for a tiller head that is ergonomically favorable for a larger range of working angles.

### Summary of the invention

It is therefore an object of the present invention to provide an improved tiller head for use in a power operated industrial truck, whereby the above-related problems of the prior art can be alleviated.

This object is achieved with a tiller head according to the appended claims.

According to the invention, there is provided a tiller head for a power operated industrial truck, to be connected to the free end of a tiller arm of said truck, said tiller head comprising:
a central body arranged in the extension of the tiller arm;
side wing extensions extending on each side of the central body;
rod-like grips extending on both sides of the central body approximately transversely to the body, and at a distance from said side wings;
limb sections joined at the outer ends of the grips and the side wings, and extending approximately parallel to the body, whereby protective bows with grip openings are formed;
drive control grips pivotably mounted on the central body and comprising depressions facing away from the grip for actuation with the thumb; and
second controls arranged on the side wing extensions on each side of the central body;
   characterized in that
the local surfaces of the side wing extension in which the second controls are arranged have essentially no vertical inclination relative to the grips or have a vertical inclination so that they obliquely fall off in the direction away from the grips; and
the actuation areas of the second controls are situated at a height less than 30 mm above a plane formed by the uppermost areas of the side wing extensions and the rod-like grips, and arranged to face in a direction essentially perpendicular to said plane, in order to permit an ergonomically favorable actuation. Preferably, the actuation areas of the second controls are situated at a height less than 15 mm above a plane formed by the uppermost areas of the side wing extensions and the rod-like grips, and most preferably less than 10 mm above said plane. In an even more advantageous embodiment, the actuation areas of the second controls are situated on or below the plane formed by the uppermost areas of the side wing extensions and the rod-like grips.

By means of such a tiller head, a very ergonomically favorable actuation is rendered possible. The second controls may hereby be operated by means of palm side of the fingers, by pressing the fingers downwards, which is a very natural way of using the fingers. Further, the fingers operating the second controls may hereby at all times be positioned in a inwardly slightly curved position, which is very ergonomically favorable. Still further, wrists of the hand may hereby be held in an essentially straight and relaxed position during operation of the tiller head. In particular, an upward flexure of the hands may hereby be avoided, which is very ergonomically favorable. Further, these advantages are obtainable in a relatively large range of different angles in which the tiller arm may be arranged, so that an ergonomically favorable working position may be achieved for different types of trucks, with the tiller arm arranged at different heights. Specifically, the tiller arm of the present invention is useable for both pedestrian trucks, where the operator walks alongside the truck during operation, and for trucks having a platform onto which the operator may step and ride while controlling the truck.

Further, the inventive tiller head enables actuation of the second controls, by means of e.g. the index finger and/or middle finger, and the drive control grips, by means of the thumbs, simultaneously or immediately after each other, and in a relaxed and ergonomic fashion, e.g. avoiding repositioning of the users hand.

Thus, the inventive tiller head has a special design that enables operation by the user's hand, without being subjected to fatigue and when reaching around the handle, can simultaneously operate the drive control grips, for driving the truck in a forward or rearward direction, and the second controls, e.g. for lifting and lowering the forks, and without any significant changed grip of the hand on the handle.

Preferably, the local surfaces of the side wing extension in which the second controls are arranged on each side of the central body have less than 10 degrees inclination in relation to each other, and preferably less than 5 degrees inclination. Most preferably, the local surfaces of the side wing extension in which the second controls are arranged are essentially coplanar, and essentially without horizontal inclination relative to the central body.

It is further preferred that at least two control actuation surfaces for different functionalities are arranged on the side wing extensions on each side of the central body, said actuation surfaces being arranged in a row next to one another and the rows on each side of the body having an inclination relative to the direction of the grips on each side which is less than 10 degrees, and preferably less than 5 degrees. Preferably, the rows on both sides of the body are arranged essentially parallel to the direction of the grips on each side, and essentially perpendicular to the general direction of the tiller arm.

Still further, a third control can preferably be arranged on at least one of the side wing extensions, said third control being arranged so that it essentially faces away from the grip opening. Such a third control may be used for overriding an automatic brake functionality of the truck and/or an automatic traction disenablement. Further, the third control is preferably arranged close to the outer end of the side wing extension, in the vicinity of the outer limb section. Hereby, this third control may easily and conveniently be actuated in e.g. a tiller-up condition, and at the same time enabling a ergonomic and powerful working position for the hands.

Essentially any type of controls and control switches may be used. However, preferably the controls arranged on at least one of the side wing extensions comprise a rocker control, whereby the controllability of the control is enhanced. This is particularly useful when the rocker control is used for proportional control of a movable part of the truck. Hereby, it is for example possible to simultaneously use two fingers, such as an index finger and a middle finger, whereby the actuation of the control can be balanced in a very precise manner.

The grip openings formed between the grips and the side wing extensions preferably have an essentially constant opening width in the direction of the central body between the central body and the outer limb sections. Hereby, a very easy and convenient repositioning of the fingers becomes possible, e.g. between a first position where the index finger and middle finger grips about the rod-like grips, and a second position in which the index finger and/or the middle finger may be extended to operate the controls. Such a repositioning is thereby rendered possible essentially without any repositioning of the palms of the hands, or the wrists.

The actuation surfaces of the second controls preferably has an extension in the axial direction of the tiller head that exceeds 2 cm, and preferably exceeds 3 cm. Hereby, the actuation surface becomes easily accessible in many different hand positions, and for many different hand sizes, finger lengths, etc.

Further, the tiller head preferably comprises a fourth control, arranged on at least one side of the central body facing essentially in a direction towards one of the side-wing extensions. This fourth control may e.g. be used for a horn functionality, and is preferably arranged so that it actuable by a finger without releasing the grip of the other fingers.

According to another aspect of the invention, there is provided a steering bar for a power operated industrial truck comprising a tiller head as discussed above, and a tiller arm, wherein a free end of the tiller arm is connected to said tiller head.

The tiller arm and steering bar as discussed above are useful for many types of power operated industrial trucks, but is particularly useful for so-called pedestrian trucks, where the operator walks alongside the truck during operation. However, it may also be used for trucks having a platform onto which the operator may step and ride while controlling the truck.

These and other aspects, objects, advantages and features of the invention will be apparent from and elicidated with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic view in perspective, illustrating a tiller arm in accordance with the invention;
Fig 2 and 5 are side views of the tiller arm of fig 1; and
Fig 3 and 4 are top views of the tiller arm of fig 1.

### Description of preferred embodiments

The tiller head of the invention is useable for essentially any type of power operated industrial truck, but is particulary useful for so-called pedestrian trucks, where the operator walks alongside the truck during operation. Such trucks are per se well known in the art, and will not be discussed in any detail in the following.

A typical power operated industrial truck for handling pallets comprises a power unit, a steering control unit and load carrying forks. The power unit contains a steerable wheel, an electric traction motor and an electric storage battery. The load carrying forks extend rearwardly from the power unit and usually have small wheels near the rearmost position to aid in supporting the load.

The steering control unit includes a steering bar with a thereto connected tiller head which the operator uses to control steering.

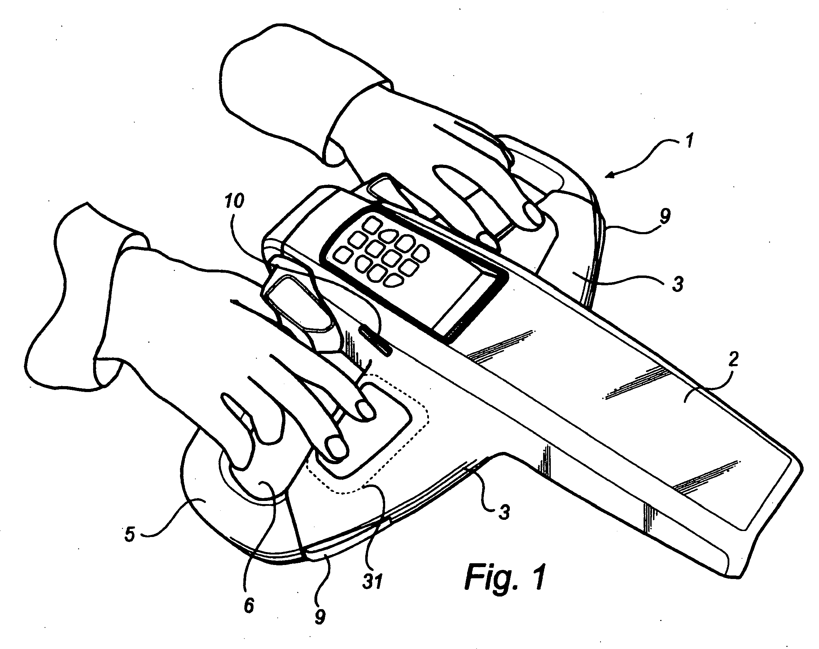

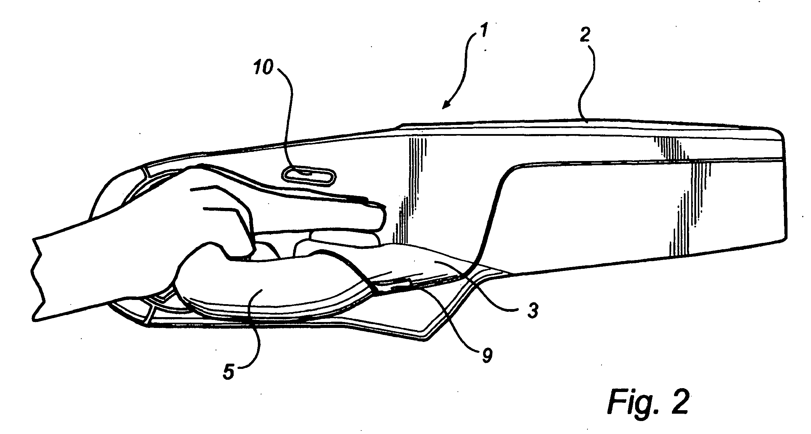

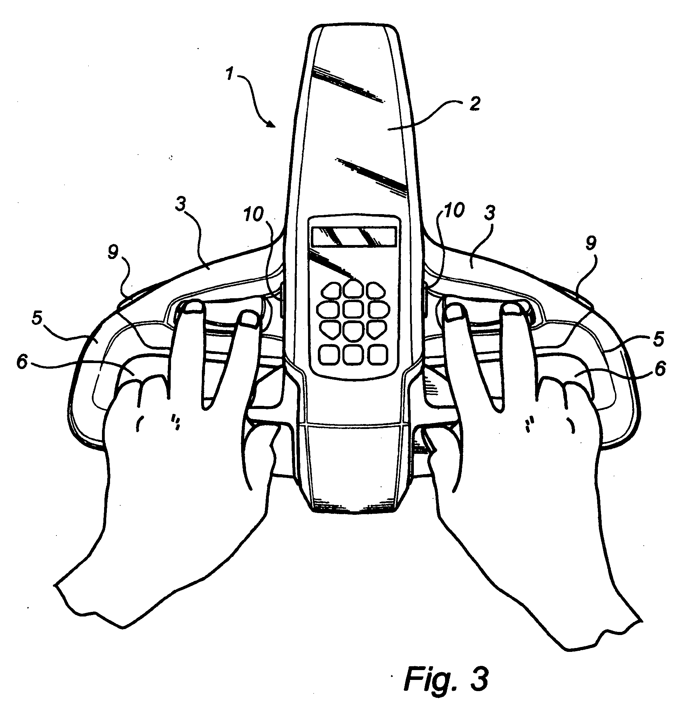

The tiller head 1, as is illustrated in figs 1-5, comprises a central body 2 arranged in the extension of the tiller arm and steering bar connected to the truck. Connected to the central body 2 are on each side a side wing extension 3 and rod-like grips 4 extending on both sides of the central body 2 approximately transversely to the body, and at a distance from said side wings 3. Further, limb sections 5 are joined at the outer ends of the grips 4 and the side wings 3, and extending approximately parallel to the body 2, thereby forming protective bows around the grip openings 6 formed therein. The grip openings 6 formed between the grips 4 and the side wing extensions 3 preferably have an essentially constant opening width in the direction of the central body 2 between the central body and the outer limb sections 5.

Drive control grips 7 are pivotably mounted on the central body and comprising depressions 71 facing away from the grip for actuation with the thumb. Such drive control grips are per se well known in the art, and are typically used for controlling the direction, i.e. forward and reverse, and speed of the truck. Thus, the direction and speed of the truck is controlled by the position of the twist grips 7. These grips are preferably spring biased to a center neutral position. Rotating either grip forward will cause the truck to move forward at a speed proportional to the amount of rotation. Similarly, rotating the grips toward the rear will cause the truck to move in reverse.

Further, second controls 8 are arranged on the side wing extensions 3 on each side of the central body 2. These second controls can be used for raising and lowering the forks.

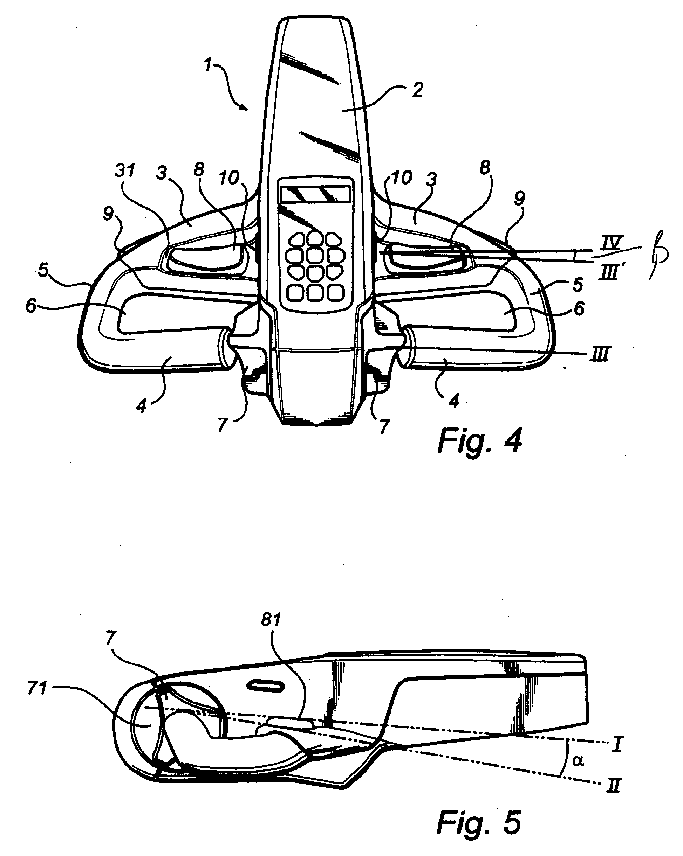

The local surfaces 31 of the side wing extension 3 in which the second controls 8 are arranged have essentially no vertical inclination relative to the grips 4 or have a vertical inclination so that they obliquely fall off in the direction away from the grips. Thus, as is illustrated in fig 5, seen from the side, the extension of the local surface 31 forms an angle α towards a line connecting the grips 4 and the side wing extensions 3, wherein the angle α is ≥ 0 degrees. Further, the planes of the local surfaces 31 of the side wing extension 3 in which the second controls are arranged on each side of the central body preferably have less than 10 degrees inclination in relation to each other, and preferably less than 5 degrees inclination. Still further, the local surfaces 31 of the side wing extensions 3 are essentially coplanar, and essentially without horizontal inclination relative to the central body 2.

Still further, the actuation areas 81 of the second controls 8 are situated at a height A less than 30 mm above a plane formed by the uppermost areas of the side wing extensions 3 and the rod-like grips 4, and arranged to face in a direction essentially perpendicular to said plane. Preferably, the height A is less than 15 mm, and most preferably less than 10 mm. In an even more advantageous embodiment, the actuation areas of the second controls are situated on or below the plane formed by the uppermost areas of the side wing extensions and the rod-like grips.

As is illustrated in e.g. fig 1-3, the tiller head allows actuation by means of the palm side of the fingers, by pressing the fingers downwards. Further, the fingers operating the controls may hereby at all times be positioned in a inwardly slightly curved and relaxed position, and the wrists of the hand may hereby be held in an essentially straight and relaxed position during operation of the tiller head. In particular, an upward flexure of the hands may hereby be avoided.

Preferably, at least two controls are arranged on the side wing extensions on each side of the central body, and arranged in a row next to one another so that the rows on both sides of the body are arranged essentially parallel to the direction of the grips on each side, or at least not deviating too much from such a parallel disposition. Thus, the rows on each side of the central body preferably has an inclination β relative to the direction of the grips on each side, as is best seen in fig 4, which is less than 10 degrees, and preferably less than 5 degrees.

Essentially any type of controls may be used. However, preferably the controls arranged on at least one of the side wing extensions comprise a rocker control 8. This is particularly useful when the rocker control is used for proportional control of a movable part of the truck.

The drive control grips 7 and the second controls 8 are so arranged that e.g. lifting and lowering by actuation of the second controls 8 can be performed in an ergonomic fashion by means of the index and/or middle finger, while simultaneously controlling the drive control grip 7 with the thumb and while grasping the rod-like grip with the other fingers. Hereby, the operator can control a driving operation and at the same time, the loading fork can also be lifted or lowered by means of the second controls.

A third control 9 can preferably be arranged on at least one of the side wing extensions, essentially facing away from the grip opening 6, and in the vicinity of the outer limb section 5. Such a third control 9 may be used for overriding an automatic brake functionality of the truck and/or an automatic traction disenablement. The third control 9 may be arranged on only one of the side wing extensions, or, as is illustrated in the drawings, on both sides.

Additionally, other controls (fourth controls), such as a horn switch 10, can be arranged on the central body. Such a horn switch may be arranged on either side of the central body, or on both sides. The horn switch 10 is preferably arranged in such a way, and in such a position, that it is easily and conveniently operable and actuable by e.g. an index finger without releasing the grip of the other fingers, and without any significant re-positioning of the hands. To this end, the horn swith 10 may be arranged on the side of the central body 2, facing essentially in the direction of the side-wing extensions 3, and arranged closer to the user than the second controls 8. However, the horn switch is also preferably arranged slightly above the normal working position of the index finger, thereby avoiding unintentional operation of the horn. Further, the horn switches preferably have an elongated form, in order to have a certain extension in the length direction of the tiller arm. Preferably, this extension in the axial, length direction of the tiller arm is at least 2 cm, and preferably at least 3 cm. Hereby, the horn switch becomes easily and conveniently operable for any user, essentially regardless of the size of the hands and length of the index fingers. Still further, the horn switches are preferably easily depressable, requiring a low or very low actuation force, since the index finger is normally relatively weak in this working direction.

Specific embodiments of the invention have now been described. However, several alternatives are possible, as would be apparent for someone skilled in the art. For example, other type of controls and control switches are possible, and the controls may also be dedicated to perform other functions in the operation of the truck. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A tiller head for a power operated industrial truck, to be connected to the free end of a tiller arm of said truck, said tiller head comprising:
a central body (2) arranged in the extension of the tiller arm;
side wing extensions (3) extending on each side of the central body;
rod-like grips (4) extending on both sides of the central body (2) approximately transversely to the body, and at a distance from said side wings;
limb sections (5) joined at the outer ends of the grips (4) and the side wings (3), and extending approximately parallel to the body, whereby protective bows with grip openings are formed;
drive control grips (7) pivotably mounted on the central body (2) and comprising depressions (71) facing away from the grip for actuation with the thumb; and
second controls (8) arranged on the side wing extensions (3) on each side of the central body, for control of a movable part of the truck;
**characterized in that**
the local surfaces (31) of the side wing extension (3) in which the second controls are arranged have essentially no vertical inclination relative to the grips or have a vertical inclination so that they obliquely fall off in the direction away from the grips; and
the actuation areas (81) of the second controls (8) are situated at a height less than 30 mm above a plane (II) formed by the uppermost areas of the side wing extensions (3) and the rod-like grips (4), and arranged to face in a direction essentially perpendicular to said plane, in order to permit an ergonomically favorable actuation.

2. The tiller head of claim 1, wherein the local surfaces of the side wing extension in which the second controls are arranged on each side of the central body have less than 10 degrees inclination in relation to each other, and preferably less than 5 degrees inclination.

3. The tiller head of claim 1 or 2, wherein the local surfaces of the side wing extension in which the second controls are arranged are essentially coplanar, and essentially without horizontal inclination relative to the central body.

4. The tiller head of any one of the preceding claims, wherein at least two control actuation surfaces for different functionalities are arranged on the side wing extensions on each side of the central body, said actuation surfaces being arranged in a row next to one another and the rows on each side of the body having an inclination relative to the direction of the grips on each side which is less than 10 degrees, and preferably less than 5 degrees.

5. The tiller head of claim 4, wherein the rows on both sides of the body are arranged essentially parallel to the direction of the grips on each side.

6. The tiller head of any one of the preceding claims, wherein a third control (9) is arranged on the side wing extension or limb section on at least one side of the central body.

7. The tiller head of claim 6, wherein said third control is arranged so that it essentially faces away from the grip opening.

8. The tiller head of claim 6 or 7, wherein said third control is useable for overriding an automatic brake functionality of the truck and/or an automatic traction disenablement.

9. The tiller head of any one of the claims 6-8, wherein said third control is arranged close to the outer end of the side wing extension, in the vicinity of the outer limb section.

10. The tiller head of any one of the preceding claims, wherein the second controls arranged on at least one of the side wing extensions comprise a rocker control.

11. The tiller head of claim 10, wherein the rocker control is useable for proportional control of a movable part of the truck.

12. The tiller head of any one of the preceding claims, wherein the grip openings formed between the grips and the side wing extensions have an essentially constant opening width in the direction of the central body between the central body and the outer limb sections.

13. The tiller head of any one of the preceding claims, wherein the actuation areas of the second controls are situated at a height less than 15 mm above a plane formed by the uppermost areas of the side wing extensions and the rod-like grips, and preferably less than 10 mm above said plane.

14. The tiller head of any one of the preceding claims, wherein the actuation areas of the second controls are situated on or below the plane formed by the uppermost areas of the side wing extensions and the rod-like grips.

15. The tiller head of any one of the preceding claims, wherein it is adapted to be used for a pedestrian truck.

16. The tiller head of any one of the preceding claims, wherein the actuation surfaces of the second controls has an extension in the axial direction of the tiller head that exceeds 2 cm, and preferably exceeds 3 cm, thereby making the actuation surface easily accessible.

17. The tiller head of any one of the preceding claims, further comprising a fourth control, arranged on at least one side of the central body facing essentially in a direction towards one of the side-wing extensions.

18. The tiller head of claim 17, wherein said fourth control is arranged so that it is actuable by a finger without releasing the grip of the other fingers.

19. A power operated industrial truck comprising a tiller head according to any one of the claims 1-18 and a tiller arm, wherein a free end of the tiller arm is connected to said tiller head.

## Patentansprüche

1. Deichsel kopf für ein kraftbetriebenes Flurförderzeug, welcher mit dem freien Ende eines Deichselarms des Flurförderzeugs zu verbinden ist, wobei der Deichselkopf umfasst:
einen mittigen Körper (2), der in der Verlängerung des Deichselarms angeordnet ist;
seitliche Flügelerweiterungen (3), die sich auf jeder Seite des mittigen Körpers erstrecken;
stangenartige Griffe (4), die sich auf beiden Seiten des mittigen Körpers (2) annähernd quer zu dem Körper und in einem Abstand von den seitlichen Flügeln erstrecken;
Gliederabschnitte (5), die an den äußeren Enden der Griffe (4) und der seitlichen Flügel (3) angefügt sind und sich annähernd parallel zu dem Körper erstrecken, wodurch Schutzbügel mit Grifföffnungen gebildet werden;
Fahrbediengriffe (7), die schwenkbar an dem mittigen Körper (2) angebracht sind und dem Griff abgewandte Vertiefungen (71) zur Betätigung mit dem Daumen umfassen; und
zweite Bedienelemente (8), die an den seitlichen Flügelerweiterungen (3) auf jeder Seite des mittigen Körpers angeordnet sind, zum Bedienen eines beweglichen Teils des Flurförderzeugs;
**dadurch gekennzeichnet, dass**
die lokalen Oberflächen (31) der seitlichen Flügelerweiterung (3), in denen die zweiten Bedienelemente angeordnet sind, im Wesentlichen keine senkrechte Neigung in Bezug auf die Griffe aufweisen oder eine senkrechte Neigung aufweisen, so dass sie in die Richtung von den Griffen weg schräg abfallen; und
die Betätigungsflächen (81) der zweiten Bedienelemente (8) in einer Höhe kleiner als 30 mm über einer Ebene (II) angeordnet sind, die durch die obersten Flächen der seitlichen Flügelerweiterungen (3) und der stangenartigen Griffe (4) gebildet wird, und angeordnet sind, um in eine Richtung zu weisen, die im Wesentlichen in einem rechten Winkel zu der Ebene verläuft, um eine ergonomisch günstige Betätigung zu ermöglichen.

2. Deichselkopf nach Anspruch 1, wobei die lokalen Oberflächen der seitlichen Flügelerweiterung, in welchen die zweiten Bedienteile auf jeder Seite des mittigen Körpers angeordnet sind, eine Neigung kleiner als 10 Grad, und vorzugsweise eine Neigung kleiner als 5 Grad, in Bezug aufeinander aufweisen.

3. Deichselkopf nach Anspruch 1 oder 2, wobei die lokalen Oberflächen der seitlichen Flügelerweiterung, in welchen die zweiten Bedienteile angeordnet sind, im Wesentlichen planparallel und im Wesentlichen ohne waagrechte Neigung in Bezug auf den mittigen Körper sind.

4. Deichselkopf nach einem beliebigen der vorhergehenden Ansprüche, wobei mindestens zwei Bedienteilbetätigungsoberflächen für unterschiedliche Funktionen an den seitlichen Flügelerweiterungen auf jeder Seite des mittigen Körpers angeordnet sind, wobei die Betätigungsoberflächen in einer Reihe nebeneinander angeordnet sind und die Reihen auf jeder Seite des Körpers eine Neigung in Bezug auf die Richtung der Griffe auf jeder Seite aufweisen, welche kleiner als 10 Grad und vorzugsweise kleiner als 5 Grad ist.

5. Deichselkopf nach Anspruch 4, wobei die Reihen auf beiden Seiten des Körpers im Wesentlichen parallel zu der Richtung der Griffe auf jeder Seite angeordnet sind.

6. Deichselkopf nach einem beliebigen der vorhergehenden Ansprüche, wobei ein drittes Bedienteil (9) an der seitlichen Flügelerweiterung oder dem Gliedabschnitt auf mindestens einer Seite des mittigen Körpers angeordnet ist.

7. Deichselkopf nach Anspruch 6, wobei das dritte Bedienelement derart angeordnet ist, dass es im Wesentlichen der Grifföffnung abgewandt ist.

8. Deichselkopf nach Anspruch 6 oder 7, wobei das dritte Bedienelement zum Übersteuern einer automatischen Bremsfunktion des Flurförderzeugs und/oder einer automatischen Traktionssperre verwendbar ist.

9. Deichselkopf nach einem beliebigen der Ansprüche 6-8, wobei das dritte Bedienelement nahe dem äußeren Ende der seitlichen Flügelerweiterung in der Nähe des äußeren Gliedabschnittes angeordnet ist.

10. Deichselkopf nach einem beliebigen der vorhergehenden Ansprüche, wobei die zweiten Bedienteile, die an mindestens einer der seitlichen Flügelerweiterungen angeordnet sind, ein Wippbedienelement umfassen.

11. Deichselkopf nach Anspruch 10, wobei das Wippbedienelement für die Proportionalsteuerung eines beweglichen Teils des Flurförderzeugs verwendbar ist.

12. Deichselkopf nach einem beliebigen der vorhergehenden Ansprüche, wobei die Grifföffnungen, die zwischen den Griffen und den seitlichen Flügelerweiterungen gebildet sind, eine im Wesentlichen konstante Öffnungsbreite in Richtung des mittigen Körpers zwischen dem mittigen Körper und den äußeren Gliedabschnitten aufweisen.

13. Deichselkopf nach einem beliebigen der vorhergehenden Ansprüche, wobei die Betätigungsflächen der zweiten Bedienteile in einer Höhe kleiner als 15 mm über einer Ebene, die durch die obersten Flächen der seitlichen Flügelerweiterungen und der stangenartigen Griffe gebildet wird, und vorzugsweise kleiner als 10 mm über der Ebene, angeordnet sind.

14. Deichselkopf nach einem beliebigen der vorhergehenden Ansprüche, wobei die Betätigungsflächen der zweiten Bedienteile auf oder unter der Ebene angeordnet sind, die durch die obersten Flächen der seitlichen Flügelerweiterungen und der stangenartigen Griffe gebildet wird.

15. Deichselkopf nach einem beliebigen der vorhergehenden Ansprüche, wobei dieser dazu ausgebildet ist, für einen Deichselstapler verwendet zu werden.

16. Deichselkopf nach einem beliebigen der vorhergehenden Ansprüche, wobei die Betätigungsoberflächen der zweiten Bedienteile eine Erweiterung in der axialen Richtung des Deichselkopfes von größer als 2 cm und vorzugsweise größer als 3 cm aufweisen, wodurch die Betätigungsoberfläche einfach zugänglich gemacht wird.

17. Deichselkopf nach einem beliebigen der vorhergehenden Ansprüche, ferner umfassend ein viertes Bedienteil, das auf mindestens einer Seite des mittigen Körpers angeordnet ist, die im Wesentlichen in eine Richtung hin zu einer der seitlichen Flügelerweiterungen weist.

18. Deichselkopf nach Anspruch 17, wobei das vierte Bedienteil derart angeordnet ist, dass es mittels eines Fingers betätigbar ist, ohne dass der Griff der anderen Finger gelöst werden muss.

19. Kraftbetriebenes Flurförderzeug, umfassend einen Deichselkopf nach einem beliebigen der Ansprüche 1-18 und einen Deichselarm, wobei ein freies Ende des Deichselarms mit dem Deichselkopf verbunden ist.

## Revendications

1. Tête de timon pour chariot industriel motorisé, à raccorder à l'extrémité libre d'un bras de timon dudit chariot, ladite tête de timon comprenant :
un corps central (2) agencé dans l'extension du bras de timon ;
des extensions d'ailes latérales (3) s'étendant sur chaque côté du corps central ;
des poignées de type barres (4) s'étendant des deux côtés du corps central (2), approximativement transversalement au corps, et à une distance desdites ailes latérales ;
des sections latérales (5) jointes aux extrémités extérieures des poignées (4) et aux ailes latérales (3), et s'étendant approximativement parallèlement au corps, moyennant quoi des étriers de protection avec des ouvertures de poignée sont formées ;
des poignées de commande d'entraînement (7) montées de manière pivotante sur le corps central (2) et comprenant des dépressions (71) se détournant de la poignée à actionner avec le pouce ; et
des secondes commandes (8) agencées sur les extensions d'ailes latérales (3), de chaque côté du corps central, à des fins de commande d'une partie mobile du chariot ;
**caractérisée en ce que**
les surfaces locales (31) de l'extension d'aile latérale (3) dans laquelle les secondes commandes sont agencées n'ont essentiellement aucune inclinaison verticale par rapport aux poignées ou ont une inclinaison verticale telle qu'elles retombent obliquement dans la direction se détournant des poignées ; et
les zones d'actionnement (81) des secondes commandes (8) sont situées à une hauteur inférieure à 30 mm au-dessus d'un plan (II) formé par la zone la plus haute des extensions d'ailes latérales (3) et les poignées de type barres (4) sont agencées afin de faire face dans une direction essentiellement perpendiculaire audit plan, de manière à permettre un actionnement ergonomiquement favorable.

2. Tête de timon selon la revendication 1, dans laquelle les surfaces locales de l'extension d'aile latérale dans lesquelles les secondes commandes sont agencées de chaque côté du corps central ont une inclinaison inférieure à 10 degrés l'une par rapport à l'autre, et de préférence une inclinaison inférieure à 5 degrés.

3. Tête de timon selon les revendications 1 ou 2, dans laquelle les surfaces locales de l'extension d'aile latérale dans laquelle les secondes commandes sont agencées sont essentiellement coplanaires, et essentiellement sans inclinaison horizontale par rapport au corps central.

4. Tête de timon selon une quelconque des revendications précédentes, dans laquelle au moins deux surfaces d'actionnement de commande pour différentes fonctionnalités sont agencées sur les extensions d'ailes latérales de chaque côté du corps central, lesdites surfaces d'agencement étant agencées dans une rangée l'une à côté de l'autre et les rangées de chaque côté du corps ayant une inclinaison par rapport à la direction des poignées de chaque côté qui est inférieure à 10 degrés, et de préférence inférieure à 5 degrés.

5. Tête de timon selon la revendication 4, dans laquelle les rangées des deux côtés du corps sont agencées essentiellement parallèlement à la direction des poignées de chaque côté.

6. Tête de timon selon une quelconque des revendications précédentes, dans laquelle une troisième commande (9) est agencée sur l'extension d'aile latérale ou la section latérale sur au moins un côté du corps central.

7. Tête de timon selon la revendication 6, dans laquelle ladite troisième commande est agencée de sorte qu'elle se détourne essentiellement de l'ouverture de poignée.

8. Tête de timon selon les revendications 6 ou 7, dans laquelle ladite troisième commande est utilisable pour suppléer à une fonctionnalité de freinage automatique du chariot et/ou une désactivation de traction automatique.

9. Tête de timon selon une quelconque des revendications 6 à 8, dans laquelle ladite troisième commande est agencée près de l'extrémité extérieure de l'extension d'aile latérale, à proximité de la section latérale extérieure.

10. Tête de timon selon une quelconque des revendications précédentes, dans laquelle les secondes commandes agencées sur au moins une des extensions d'aile latérale comprennent une commande de balancier.

11. Tête de timon selon la revendication 10, dans laquelle la commande de balancier est utilisable en vue d'une commande proportionnelle d'une partie mobile du chariot.

12. Tête de timon selon une quelconque des revendications précédente, dans laquelle les ouvertures de poignée formées entre les poignées et les extensions d'ailes latérales ont une largeur d'ouverture essentiellement constante dans la direction du corps central entre le corps central et les sections latérales extérieures.

13. Tête de timon selon une quelconque des revendications précédentes, dans laquelle les zones d'actionnement des secondes commandes sont situées à une hauteur inférieure à 15 mm au-dessus d'un plan formé par les zones les plus hautes des extensions d'ailes latérales et des poignées de type barres, et de préférence inférieure à 10 mm au-dessus dudit plan.

14. Tête de timon selon une quelconque des revendications précédentes, dans laquelle les zones d'actionnement des secondes commandes sont situées sur ou au-dessous du plan formé par les zones les plus hautes des extensions d'ailes latérales et des poignées de type barres.

15. Tête de timon selon une quelconque des revendications précédentes, dans laquelle elle est adaptée à une utilisation pour un chariot à conducteur à pied.

16. Tête de timon selon une quelconque des revendications précédentes, dans laquelle les surfaces d'actionnement des secondes commandes ont une extension dans la direction axiale de la tête de timon qui excède 2 cm, et de préférence excède 3 cm, en rendant ainsi la surface d'actionnement facilement accessible.

17. Tête de timon selon une quelconque des revendications précédentes, comprenant en outre une quatrième commande, agencée sur au moins un côté du corps central tourné essentiellement dans une direction allant vers une des extensions d'ailes latérales.

18. Tête de timon selon la revendication 17, dans laquelle ladite quatrième commande est agencée de sorte qu'elle soit actionnable par un doigt sans relâcher la prise des autres doigts.

19. Chariot industriel motorisé comprenant une tête de timon selon une quelconque des revendications 1 à 18 et un bras de timon, dans lequel une extrémité libre du bras de timon est raccordée à ladite tête de timon.
